# EUROPÄISCHE PATENTSCHRIFT

(11) **EP 2 964 471 B1**
(45) Veröffentlichungstag und Bekanntmachung des Hinweises auf die Patenterteilung: **31.10.2018**
(21) Anmeldenummer: 14704364.0
(22) Anmeldetag: 14.02.2014
(51) Int. Cl.: B60B 7/02, B60B 7/06, B60B 7/08

(54) **FELGENANORDNUNG**
RIM ASSEMBLY
ENSEMBLE À JANTE

(30) Priorität: 04.03.2013 DE 102013003690
(43) Veröffentlichungstag der Anmeldung: 13.01.2016
(73) Patentinhaber: Bayerische Motoren Werke Aktiengesellschaft, 80809 München (DE)
(72) Erfinder: GIELISCH, Sebastian, 85716 Unterschleissheim (DE); LOCH, Robert, 81379 München (DE)
(86) Internationale Anmeldenummer: PCT/EP2014/052930
(87) Internationale Veröffentlichungsnummer: WO 2014/135356

(56) Entgegenhaltungen:
- EP-A1- 0 763 436
- DE-A1- 2 907 622
- DE-A1-102009 030 059
- DE-U1- 8 217 015

## Beschreibung

Vorliegende Erfindung betrifft eine Felgenanordnung mit einer Felge und einer Abdeckung nach dem Oberbegriff des Anspruchs 1 sowie ein Verfahren zur Montage einer erfindungsgemäßen Felgenanordnung.

Im Stand der Technik gibt es für Stahlfelgen üblicherweise Radkappen, die beispielsweise radial innerhalb oder außerhalb des Humps in die Felge ohne Zwischenlage von Dichtringen oder dgl. eingeclipst werden, vgl. bspw. die DE 29 07 622 A1, oder gemäß US 6,209,204 B1 aufgeclipst werden, wobei dort an einer abseits der Clipsverbindung liegenden Fläche ein Dichtelement vorhanden ist. Auch die Druckschrift DE 8217015 U zeigt beispielhaft eine Abdeckung für Leichtmetallräder, die die Felge vor Verschmutzung schützt und unter Zwischenlage eines Dichtringes in einer Nut der Felge gehalten ist. Eine andere Befestigungsanordnung für eine Abdeckscheibe mit einem Spannring und daran vorgesehenen Fixierrollen zeigt die EP 0 763 436 A1.

Es ist Aufgabe vorliegender Erfindung, eine Felgenanordnung mit einer außenseitigen dichten Abdeckung anzugeben, die bei kostengünstiger Herstellung und Montage eine betriebssichere und gleichzeitig aerodynamisch optimierte Gestaltung ermöglicht. Des Weiteren ist es Aufgabe vorliegender Erfindung, ein kostengünstiges und effizientes Montageverfahren für die Felgenanordnung anzugeben.

Die Aufgabe wird gelöst durch die Merkmale des unabhängigen Anspruchs gelöst. Die abhängigen Ansprüche haben vorteilhafte Weitergestaltungen der Erfindung (einschließlich eines günstigen und effizientes Montageverfahrens) zum Gegenstand.

Somit wird die Aufgabe gelöst durch eine Felgenanordnung für ein Fahrzeug, umfassend eine Felge und eine scheibenförmige Abdeckung. An der Felge ist eine dem Fahrzeug zuzuwendende axiale Innenseite und eine dem Fahrzeug abzuwendende axiale Außenseite definiert. Die axiale Außenseite ist für den Betrachter des Fahrzeugs sichtbar. An der axialen Außenseite der Felge ist ein Felgenhorn ausgebildet. Des Weiteren weist die Felge eine erste Nut auf. Diese erste Nut ist insbesondere vollumfänglich angeordnet und somit ringförmig ausgebildet. Die erste Nut befindet sich im Felgenhorn oder axial außerhalb des Felgenhorns. In die erste Nut wird die scheibenförmige Abdeckung eingesteckt, so dass ein radial äußerer Rand der Abdeckung in der ersten Nut steckt. Dieser radial äußere Rand der Abdeckung ist ebenfalls ringförmig, so dass entlang des gesamten Umfangs der radial äußere Rand der Abdeckung in der ersten Nut steckt. Durch die Positionierung der ersten Nut am Felgenhorn oder axial außerhalb des Felgenhorns, wird sichergestellt, dass die Abdeckung möglichst weit außen an der Felge positioniert ist. Dadurch ist es möglich, die Felge, insbesondere im Bereich der Speichen, abzudecken, so dass eine aerodynamisch optimale Gestaltung der Felgenanordnung entsteht. Gleichzeitig wird somit auch eine Verschmutzung der Felge und eine etwaige Korrosion verhindert. Die Abdeckung ist nämlich innerhalb der ersten Nut mit einem ersten elastischen Element, vorzugsweise aus Gummi, geklemmt. Das erste elastische Element ermöglicht eine einfache Montage und spätere Demontage der Abdeckung. Ferner stellt das erste elastische Element eine betriebsfeste und fluiddichte Verbindung zwischen der Abdeckung und der ersten Nut sicher. Durch die fluiddichte Verbindung kann der Innenraum der Felge dicht ausgestaltet werden, so dass Korrosion verhindert wird.

Dabei ist dieses erste elastische Element auf den radial äußeren Rand der Abdeckung aufvulkanisiert oder aufgeklebt ist. Das Aufvulkanisieren oder Aufkleben des ersten elastischen Elementes hat entscheidende Vorteile bei der Montage der Abdeckung. Die Abdeckung mit dem aufvulkanisierten oder aufgeklebten elastischen Element kann vorgefertigt werden und muss bei der Endmontage nur noch in die Felge eingesetzt werden. Das erste elastische Element sorgt dabei gleichzeitig für eine Zentrierung der Abdeckung. Des Weiteren kann die Abdeckung zerstörungsfrei wieder demontiert werden. Das erste elastische Element verbleibt dabei auf dem radial äußeren Rand der Abdeckung. Ferner ist vorgesehen, dass das erste elastische Element voll umfänglich um den radial äußeren Rand der Abdeckung angeordnet ist. Dadurch ist eine sichere und fluiddichte Verbindung zwischen der Abdeckung und der Felge möglich. und es umgreift das erste elastische Element den radial äußeren Rand der Abdeckung. Durch dieses Umgreifen liegt ein erster Bestandteil des ersten elastischen Elementes auf der axialen Innenseite der Abdeckung an der Abdeckung an. Ein zweiter Bestandteil des ersten elastischen Elementes liegt auf der axialen Außenseite der Abdeckung an. Durch das Umgreifen des radial äußeren Randes fixiert das erste elastische Element die Abdeckung in beiden axialen Richtungen.

Des Weiteren kann bevorzugt vorgesehen sein, dass an der axialen Außenseite der ersten Nut eine Wandung der ersten Nut durch einen Steg der Felge gebildet ist. An diesem Steg ist ein radial inneres Ende definiert. Diesem radial inneren Ende des Steges liegt ein bestimmter schräger Anteil der Abdeckung gegenüber. Dieser schräge Anteil der Abdeckung erstreckt sich zumindest teilweise in axialer Richtung. Das erste elastische Element umfasst einen dritten Bestandteil, der zwischen dem Ende des Steges und dem schrägen Anteil der Abdeckung eingeklemmt ist. Dadurch fixiert das erste elastische Element die Abdeckung auch in radialer Richtung, wobei die erste Nut bevorzugt so gestaltet ist, dass sie in Radialrichtung zur Mitte der Felge hin offen ist. Dadurch ist eine einfache Montage der Abdeckung, beispielsweise durch Bombieren der Abdeckung, möglich.

Da die Abdeckung und die Felge unterschiedliche Wärmeausdehnungskoeffizienten aufweisen können, ist bevorzugt vorgesehen, dass das erste elastische Element in der ersten Nut in Radialrichtung ein Spiel aufweist. Dieses Spiel beträgt vorzugsweise zumindest 1 mm, besonders vorzugsweise zumindest 2 mm. Das Spiel steht in alle radialen Richtungen zur Verfügung. Für eine sichere Aufnahme der Abdeckung mit ausreichendem Spiel ist die Nut in Radialrichtung tiefer als in Axialrichtung breit.

Die Abdeckung ist vorzugsweise ringförmig ausgebildet. Durch die ringförmige Ausbildung weist die Abdeckung eine mittige Ausnehmung auf. Diese mittige Ausnehmung dient als Aussparung für die Nabe der Felge und/oder als Zugang zu Befestigungslöchern der Felge. Die Nabe und/oder die Befestigungslöcher werden bevorzugt durch einen separaten Deckel abgedeckt. Dieser Deckel ist ohne weiteres demontierbar, so dass die Felge am Fahrzeug montierbar und demontierbar ist.

Durch die ringförmige Ausgestaltung der Abdeckung entsteht an der mittigen Ausnehmung ein radial innerer Rand der Abdeckung. Dieser radial innere Rand der Abdeckung sitzt vorzugsweise in einer zweiten Nut der Felge. Die zweite Nut der Felge ist vorzugsweise vollumfänglich und somit ringförmig ausgestaltet. Die zweite Nut der Felge ist bevorzugt in radialer Richtung nach außen hin geöffnet. Für den sicheren Sitz des radial inneren Randes der Abdeckung in der zweiten Nut ist bevorzugt ein zweites elastisches Element vorgesehen. Das zweite elastische Element erstreckt sich bevorzugt entlang des gesamten Umfangs des radial inneren Randes der Abdeckung.

Vorteilhafterweise ist auch das zweite elastische Element auf den radial inneren Rand der Abdeckung aufvulkanisiert oder aufgeklebt, so dass eine einfache Montage und eine dichte Verbindung möglich ist.

In bevorzugter Ausführung ist vorgesehen, dass das zweite elastische Element den radial inneren Rand der Abdeckung umgreift, so dass das zweite elastische Element auf der axialen Innenseite der Abdeckung und auf der axialen Außenseite der Abdeckung anliegt. Dadurch ist eine Abstützung der Abdeckung in beiden axialen Richtungen gegeben.

Die Abdeckung besteht vorzugsweise aus faserverstärktem Kunststoff. Hierzu wird besonders bevorzugt glasfaserverstärkter oder kohlefaserverstärkter Kunststoff gewählt. Die Felge besteht vorzugsweise aus Leichtmetall, insbesondere aus einer Aluminiumlegierung oder Magnesiumlegierung.

Vorgeschlagen wird weiterhin ein Verfahren zur Montage einer erfindungsgemäßen Felgenanordnung, umfassend die folgenden Schritte: (i) Bombieren der scheibenförmigen Abdeckung, so dass sich der Außendurchmesser der Abdeckung reduziert, (ii) Positionieren der Abdeckung an der besagten umlaufenden esrten Nut der Felge, und (iii) Lösen der Bombierung, so dass der radial äußerer Rand der Abdeckung in die erste Nut gleitet, wobei ein erstes elastisches Element in der ersten Nut zum Einklemmen des radial äußeren Randes vorgesehen ist, welches vor dem Aufbringen der Bombierung, auf den radial äußeren Rand der Abdeckung aufvulkanisiert oder aufgeklebt wurde.

Zum Bombieren der Abdeckung wird insbesondere in die mittige Ausnehmung der Abdeckung eingegriffen und im äußeren Bereich gegengehalten, so dass die entsprechende Kraft für die Bombierung auf die Abdeckung aufgebracht werden kann. Das Bombieren der Abdeckung für den Montagevorgang ermöglicht ein sehr schnelles und prozesssicheres Positionieren der Abdeckung.

Die Abdeckung stellt, mit Ausnahme der mittigen Ausnehmung, eine geschlossene Fläche dar und deckt somit die axiale Außenseite der Felge zwischen der Nabe und dem Felgenhorn vollständig ab. Dadurch werden Luftverwirbelungen in der Felge weitestgehend vermieden und es entsteht eine aerodynamisch optimierte Felgenanordnung.

Weitere Einzelheiten, Merkmale und Vorteile der Erfindung ergeben sich aus der nachfolgenden Beschreibung und den Figuren. Es zeigen:
- Figur 1: eine Schnittansicht einer erfindungsgemäßen Felgenanordnung gemäß einem Ausführungsbeispiel,
- Figur 2: ein Detail der erfindungsgemäßen Felgenanordnung mit ausgeblendeter Abdeckung,
- Figur 3: ein erstes Detail aus Figur 1, und
- Figur 4: ein zweites Detail aus Figur 1.

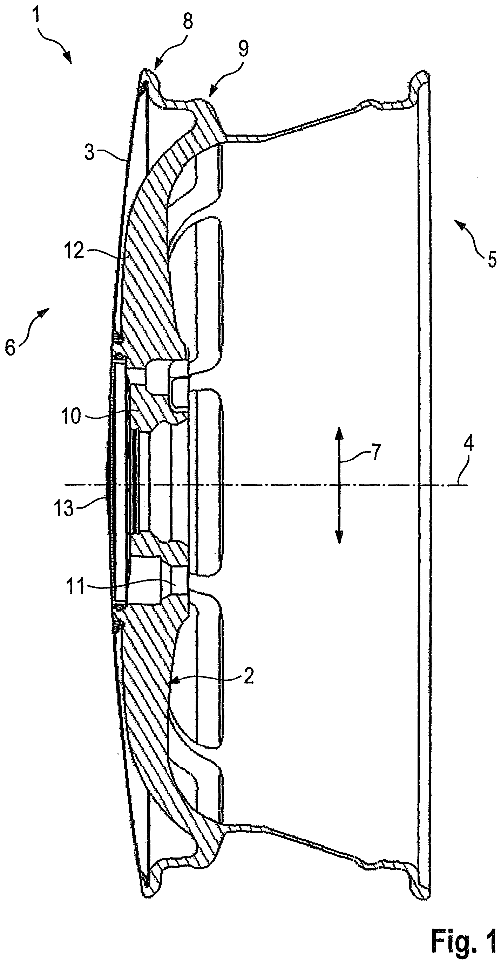

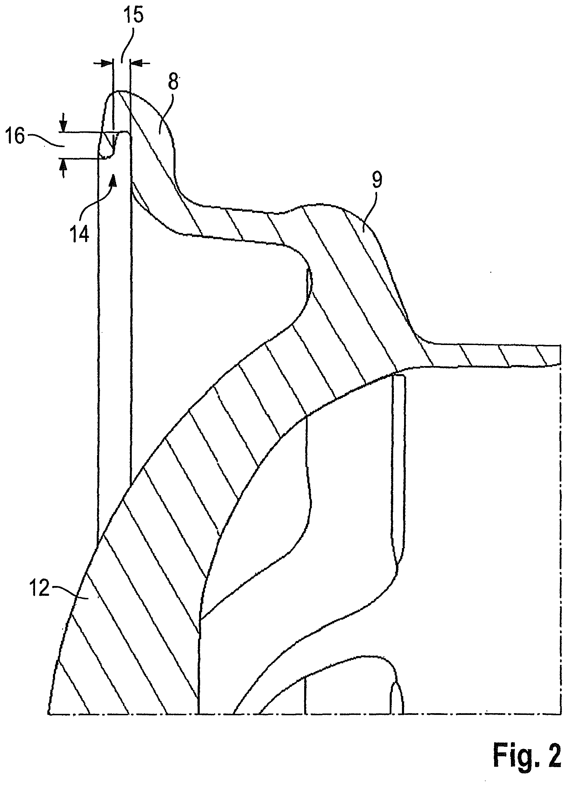

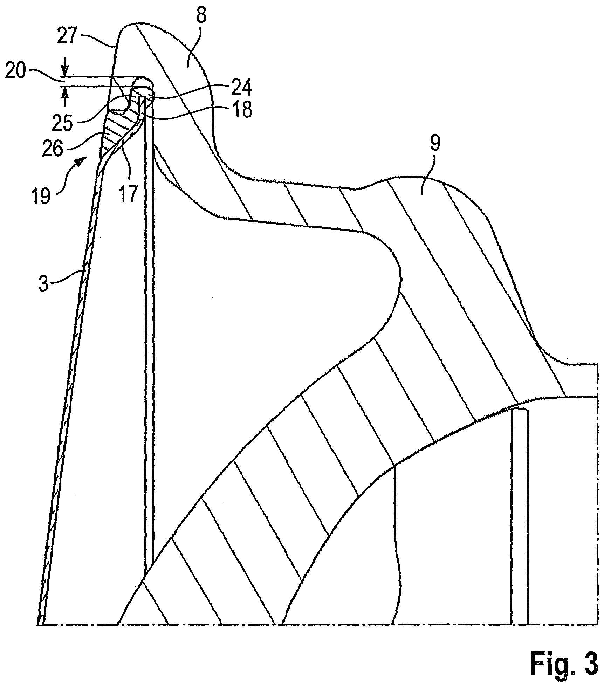

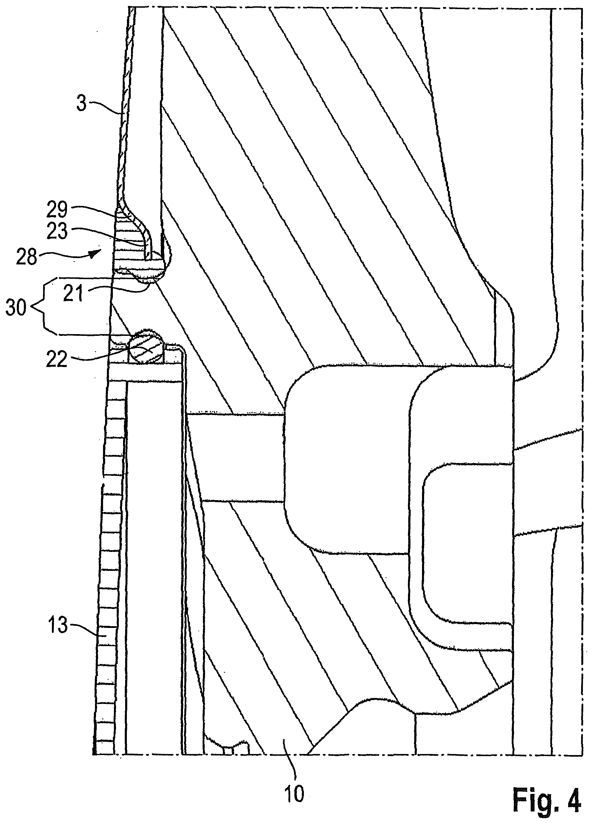

Im Folgenden wird ein Ausführungsbeispiel einer Felgenanordnung 1 anhand der Figuren 1 bis 4 im Detail erläutert. Die Felgenanordnung 1 setzt sich zusammen aus einer Felge 2 und einer Abdeckung 3. Figur 1 zeigt die Felge 2 mit montierter Abdeckung 3 in einer Schnittansicht. In Figur 2 ist die Abdeckung 3 ausgeblendet. Figur 3 zeigt eine erste Detailansicht aus Figur 1. Figur 4 zeigt eine zweite Detailansicht aus Figur 1.

Die Felgenanordnung 1 umfasst die Felge 2, vorzugsweise aus Leichtmetall, und die Abdeckung 3, vorzugsweise aus faserverstärktem Kunststoff. Die Felge 2 wird um eine Achse 4 drehbar an einem Fahrzeug befestigt. Die dem Fahrzeug zugewandte Seite wird als axiale Innenseite 5 bezeichnet. Die nach außen sichtbare Seite ist die axiale Außenseite 6. Senkrecht zur Achse 4 ist eine Radialrichtung 7 definiert.

Die Felge 2 weist ein der axialen Außenseite 6 zugewandtes Felgenhorn 8 und einen Hump 9 auf. Des Weiteren umfasst die Felge 2 eine Nabe 10. In dieser Nabe 10 sind Befestigungslöcher 11 ausgebildet. Über die Befestigungslöcher 11 wird die Felge 2 mit dem Fahrzeug verschraubt. Von der Nabe 10 erstrecken sich in Radialrichtung 7 mehrere Speichen 12.

Der Bereich von der Nabe 10 zum Felgenhorn 8 ist durch die ringförmige Abdeckung 3 abgedeckt. Die Nabe 10 und somit die Befestigungslöcher 11 sind mittels eines Nabendeckels 13 abgedeckt.

Gemäß Figur 2 weist die Felge 2 eine ringförmige erste Nut 14 auf. Die erste Nut 14 befindet sich im Felgenhorn 8 oder axial außerhalb des Felgenhorns 8 Die erste Nut 14 ist radial außerhalb des Humps 9 positioniert und in Radialrichtung 7 zur Mitte der Felge 2 hin geöffnet. In Axialrichtung ist eine Breite 15 der ersten Nut 14 definiert. Die Breite 15 wird an der breitesten Stelle der ersten Nut 14 gemessen. In Radialrichtung 7 ist eine Tiefe 16 der ersten Nut 14 definiert. Die Tiefe 16 der ersten Nut 14 ist größer als die Breite 15. Dadurch ist sichergestellt, dass die Abdeckung 3 gut in der ersten Nut 14 sitzt und durch die entsprechende Tiefe 16 ein ausreichendes Spiel 20 in Radialrichtung 7 hat.

Figur 3 zeigt im Detail einen radial äußeren Rand 18 der Abdeckung 3. Radial innerhalb des radial äußeren Randes 18 weist die Abdeckung 3 einen schrägen Anteil 17 auf.

Auf den radial äußeren Rand 18 der Abdeckung 3 ist über den gesamten Umfang ein erstes elastisches Element 19 aufvulkanisiert. Das erste elastische Element 19 besteht beispielsweise aus Gummi. Das erste elastische Element 19 weist einen ersten Bestandteil 24, einen zweiten Bestandteil 25 und einen dritten Bestandteil 26 auf. Der erste Bestandteil 24 befindet sich axial innerhalb der Abdeckung 3. Der zweite Bestandteil 25 befindet sich axial außerhalb der Abdeckung 3. Diese beiden Bestandteile 24, 25 fixieren die Abdeckung 3 in der ersten Nut 14 in axialer Richtung.

Die Felge 2 weist im Querschnitt betrachtet einen Steg 27 auf. Dieser Steg 27 bildet die axial äußere Wandung der ersten Nut 14. Des Weiteren weist der Steg 27 ein radial inneres Ende auf. Diesem radial inneren Ende des Steges 27 liegt der schräge Anteil 17 der Abdeckung 3 gegenüber. Zwischen diesem Anteil 17 und dem radialen Ende des Steges 27 befindet sich der dritte Bestandteil 26 des ersten elastischen Elementes 19. Der dritte Bestandteil 26 klemmt die Abdeckung 3 in Radialrichtung 7.

Die Abdeckung 3 und das erste elastische Element 19 sind so dimensioniert, dass in der ersten Nut 14 in Radialrichtung 7 das Spiel 20 verbleibt.

Figur 4 zeigt, dass die Abdeckung 3 im Bereich der Nabe 10 eine mittige Ausnehmung umfasst. Dadurch entsteht ein radial innerer Rand 23 der Abdeckung 3. Dieser radial innere Rand 23 sitzt in einer zweiten Nut 21 der Felge 2. Die zweite Nut 21 ist ringförmig ausgestaltet und in Radialrichtung 7 nach außen hin offen. Zur Fixierung des radial inneren Randes 23 in der zweiten Nut 21 ist ein zweites elastisches Element 28 angeordnet. Dieses zweite elastische Element 28 umgreift den radial inneren Rand 23, so dass die Abdeckung 3 auch in diesem Bereich in beide Axialrichtungen fixiert ist. Des Weiteren weist die Abdeckung 3 im Bereich des radial inneren Randes 23 einen weiteren schrägen Anteil 29 auf, um die Abdeckung 3 mittels des zweiten elastischen Elementes 28 in Radialrichtung 7 zu stützen.

Figur 4 zeigt, dass der Nabendeckel 13 mittels eines O-Rings 22 in der Felge 2 befestigt ist. Zwischen dem Nabendeckel 13 und der Abdeckung 3 weist die Felge 2 einen ringförmigen Fortsatz 30 auf. Radial außerhalb des ringförmigen Fortsatzes 30 ist die zweite Nut 21 ausgebildet. Radial innerhalb des Fortsatzes 30 ist der Nabendeckel 13 mittels des O-Rings 22 befestigt.

Bevorzugt fluchten der Fortsatz 30, der Nabendeckel 13 und die Abdeckung 3 auf der axialen Außenseite 6 der Felgenanordnung 1, so dass hier eine optisch und aerodynamisch geschlossene Außenfläche entsteht.

## Patentansprüche

1. Felgenanordnung (1) für ein Fahrzeug, umfassend eine Felge (2) mit einer dem Fahrzeug zuzuwendenden axialen Innenseite (5) und einer dem Fahrzeug abzuwendenden axialen Außenseite (6), ein an der axialen Außenseite (6) der Felge (2) ausgebildetes Felgenhorn (8), eine in der Felge (2) ausgebildete erste Nut (14), wobei die erste Nut (14) im Felgenhorn (8) oder axial außerhalb des Felgenhorns (8) angeordnet ist, und eine scheibenförmige, die axiale Außenseite (6) der Felge (2) abdeckende Abdeckung (3), deren radial äußerer Rand (18) in der ersten Nut (14) steckt, mit einem ersten elastisches Element (19) in der ersten Nut (14) zum Einklemmen des radial äußeren Randes (18), **dadurch gekennzeichnet, dass** dass das erste elastische Element (19) auf den radial äußeren Rand (18) der Abdeckung (3) aufvulkanisiert oder aufgeklebt ist und den radial äußeren Rand (18) der Abdeckung (3) vollumfänglich umgreift, so dass ein erster Bestandteil (24) des ersten elastischen Elements (19) auf der axialen Innenseite (5) der Abdeckung (3) anliegt und ein zweiter Bestandteil (25) des ersten elastischen Elements (19) auf der axialen Außenseite (6) der Abdeckung (3) anliegt.

2. Felgenanordnung nach Anspruch 1, **dadurch gekennzeichnet, dass** an der axialen Außenseite (6) der in Radialrichtung (7) zur Mitte der Felge (2) hin offenen Nut (14) eine Wandung der ersten Nut (14) durch einen Steg (27) gebildet ist, wobei einem radial inneren Ende des Steges (27) ein Anteil (17) der Abdeckung (3) in Radialrichtung (7) gegenüber liegt, und wobei das erste elastische Element (19) zwischen dem Ende des Steges (27) und dem Anteil (17) der Abdeckung (3) eingeklemmt ist.

3. Felgenanordnung nach Anspruch 1 oder 2, **dadurch gekennzeichnet, dass** das erste elastische Element (19) in der ersten Nut (14) in Radialrichtung (7) ein Spiel (20), vorzugsweise von zumindest 1 mm aufweist.

4. Felgenanordnung nach einem der vorhergehenden Ansprüche, **dadurch gekennzeichnet, dass** eine in Axialrichtung gemessene Breite (15) der ersten Nut (14) kleiner ist als eine in Radialrichtung (7) gemessene Tiefe (16) der ersten Nut (14).

5. Felgenanordnung nach einem der vorhergehenden Ansprüche, **dadurch gekennzeichnet, dass** die Abdeckung (3) ringförmig ausgebildet ist und eine mittige Ausnehmung für eine Nabe (10) der Felge (2) und/oder als Zugang zu Befestigungslöchern (11) der Felge (2) aufweist.

6. Felgenanordnung nach Anspruch 5, **dadurch gekennzeichnet, dass** ein radial innerer Rand (23) der Abdeckung (3) in einer zweiten Nut (21) der Felge (2) sitzt, wobei ein zweites elastisches Element (28) in der zweiten Nut (21) zum Einklemmen des radial inneren Randes (23) angeordnet ist.

7. Felgenanordnung nach Anspruch 6, **dadurch gekennzeichnet, dass** das zweite elastische Element (28) auf den radial inneren Rand (23) der Abdeckung (3) aufvulkanisiert oder aufgeklebt ist.

8. Felgenanordnung nach einem der Ansprüche 6 oder 7, **dadurch gekennzeichnet, dass** das zweite elastische Element (28) den radial inneren Rand (23) der Abdeckung (3) umgreift, so dass das zweite elastische Element (28) auf der axialen Innenseite der Abdeckung und auf der axialen Außenseite der Abdeckung anliegt.

9. Felgenanordnung nach einem der vorhergehenden Ansprüche, **dadurch gekennzeichnet, dass** die Abdeckung (3) aus faserverstärktem Kunststoff besteht.

10. Verfahren zur Montage einer Felgenanordnung (1) nach einem der vorangegangenen Ansprüche, umfassend die folgenden Schritte:
- Bombieren der scheibenförmigen Abdeckung (3), so dass sich der Außendurchmesser der Abdeckung (3) reduziert,
- Positionieren der Abdeckung (3) an umlaufenden ersten Nut (14) der Felge (2), und
- Lösen der Bombierung, so dass der radial äußere Rand (18) der Abdeckung (3) in die erste Nut (14) gleitet,
- wobei das zum Einklemmen des radial äußeren Randes (18) in der ersten Nut (14) vorgesehen erste elastische Element (19) vor dem Lösen der Bombierung auf den radial äußeren Rand (18) der Abdeckung (3) aufvulkanisiert oder aufgeklebt wird.

## Claims

1. A rim assembly (1) for a vehicle, comprising a rim (2) with an axial inner side (5) facing the vehicle and an axial outer side (6) facing away from the vehicle, a rim flange (8) formed on the axial outer side (6) of the rim (2), a first groove (14) formed in the rim (2), wherein the first groove (14) is arranged in the rim flange (8) or axially outside the rim flange (8), and a disc-shaped cover (3), which covers the axial outer side (6) of the rim (2) and the radially outer edge (18) of which inserts in the first groove (14), with a first resilient element (19) in the first groove (14) for clamping the radially outer edge (18), **characterised in that** the first resilient element (19) is vulcanised or adhesively bonded onto the radially outer edge (18) of the cover (3) and engages around the radially outer edge (18) of the cover (3) over its entire circumference, such that a first component (24) of the first resilient element (19) rests on the axial inner side (5) of the cover (3) and a second component (25) of the first resilient element (19) rests on the axial outer side (6) of the cover (3).

2. A rim assembly according to claim 1, **characterised in that** a wall of the first groove (14) is formed by a limb (27) at the axial outer side (6) of the groove (14) open in the radial direction (7) towards the middle of the rim (2), wherein a radially inner end of the limb (27) is opposite a portion (17) of the cover (3) in the radial direction (7), and wherein the first resilient element (19) is clamped between the end of the limb (27) and the portion (17) of the cover (3).

3. A rim assembly according to claim 1 or 2, **characterised in that** the first resilient element (19) in the first groove (14) in the radial direction (7) has a play (20), preferably of at least 1 mm.

4. A rim assembly according to any one of the preceding claims, **characterised in that** a width (15) of the first groove (14) measured in the axial direction is smaller than a depth (16) of the first groove (14) measured in the radial direction (7).

5. A rim assembly according to any one of the preceding claims, **characterised in that** the cover (3) is annular and has a central recess for a hub (10) of the rim (2) and/or as access to fastening holes (11) of the rim (2).

6. A rim assembly according to claim 5, **characterised in that** a radially inner edge (23) of the cover (3) sits in a second groove (21) of the rim (2), wherein a second resilient element (28) is arranged in the second groove (21) for clamping the radially inner edge (23).

7. A rim assembly according to claim 6, **characterised in that** the second resilient element (28) is vulcanised or adhesively bonded onto the radially inner edge (23) of the cover (3).

8. A rim assembly according to one of claims 6 or 7, **characterised in that** the second resilient element (28) engages around the radially inner edge (23) of the cover (3), such that the second resilient element (28) rests on the axial inner side of the cover and on the axial outer side of the cover.

9. A rim assembly according to any one of the preceding claims, **characterised in that** the cover (3) is made of fibre-reinforced plastic.

10. A method for mounting a rim assembly (1) according to any one of the preceding claims, comprising the following steps:
- forcing the disc-shaped cover (3) into a domed shape, such that the outer diameter of the cover (3) reduces,
- positioning the cover (3) on the peripheral first groove (14) of the rim (2), and
- releasing the force exerted to create the domed shaping, such that the radially outer edge (18) of the cover (3) slides into the first groove (14),
- wherein the first resilient element (19) provided for clamping the radially outer edge (18) in the first groove (14) is vulcanised or adhesively bonded onto the radially outer edge (18) of the cover (3) before the force exerted to create the domed shaping is released.

## Revendications

1. Agencement de jante (1) destiné à un véhicule comprenant une jante (2) ayant un côté axial interne (5) tourné vers le véhicule et un côté axial externe (6) tourné à l'opposé du véhicule, un rebord de jante (8) formé sur le côté axial externe (6) de la jante (2), une première rainure (14) formée dans la jante (2), cette première rainure (14) étant située dans le rebord de jante (8) ou axialement à l'extérieur du rebord de jante (8), et un capot (3) en forme de disque recouvrant le côté axial externe (6) de la jante (2) et dont le bord radial externe (18) s'enfiche dans la première rainure (14), ainsi qu'un premier élément élastique (19) situé dans la première rainure (14) pour permettre de pincer le bord radial externe (18),
**caractérisé en ce que**
le premier élément élastique (19) est vulcanisé ou collé sur le bord radial externe (18) du capot (3) et vient en prise sur la totalité de la périphérie du bord radial externe (18) du capot (3) de sorte qu'un premier composant (24) du premier élément élastique (19) s'applique sur le côté axial interne (5) du capot (3) et qu'un second composant (25) du premier élément élastique (19) s'applique sur le côté axial externe (6) du capot (3).

2. Agencement de jante conforme à la revendication 1,
**caractérisé en ce que**
sur le côté axial externe (6) de la première rainure (14) ouverte en direction radiale (7) vers le centre de la jante (2) une paroi de cette première rainure (14) est formée par une barrette (27), dont l'extrémité radiale interne est située à l'opposé d'une partie (17) du capot (3) en direction radiale (7), et le premier élément élastique (19) étant pincé entre l'extrémité de la barrette (27) et la partie (17) du capot (3).

3. Agencement de jante conforme à la revendication 1 ou 2,
**caractérisé en ce que**
le premier élément élastique (19) présente dans la première rainure (14), en direction radiale (7), un jeu (20), de préférence d'au moins 1 mm.

4. Agencement de jante conforme à l'une des revendications précédentes,
**caractérisé en ce que**
la largeur (15) mesurée dans la direction axiale de la première rainure (14) est inférieure à la profondeur (16) mesurée dans la direction radiale (7) de cette première rainure (14).

5. Agencement de jante conforme à l'une des revendications précédentes,
**caractérisé en ce que**
le capot (3) est de forme annulaire et comporte un évidement médian pour le moyeu (10) de la jante et/ou constituant un accès à des perçages de fixation (11) de la jante (2).

6. Agencement de jante conforme à la revendication 5,
**caractérisé en ce que**
le bord radial interne (23) du capot (3) est inséré dans une seconde rainure (21) de la jante (2), un second élément élastique (28) étant positionné dans la seconde rainure (21) pour permettre de pincer le bord radial interne (23).

7. Agencement de jante conforme à la revendication 6,
**caractérisé en ce que**
le second élément élastique (28) est vulcanisé ou collé sur le bord radial interne (23) du capot (3).

8. Agencement de jante conforme à l'une des revendications 6 et 7,
**caractérisé en ce que**
le second élément élastique (28) vient en prise autour du bord radial interne (23) du capot (3) de sorte que ce second élément élastique (28) s'applique sur le côté axial interne du capot et sur le côté axial externe de ce capot.

9. Agencement de jante conforme à l'une des revendications précédentes,
**caractérisé en ce que**
le capot (3) est réalisé en un matériau synthétique renforcé par des fibres.

10. Procédé de montage d'un agencement de jante (1) conforme à l'une des revendications précédentes, comprenant les étapes suivantes consistant à :
- cintrer le capot en forme de disque (3) de façon à réduire son diamètre externe,
- positionner le capot (3) sur une première rainure périphérique (14) de la jante (2), et
- relâcher le cintrage de sorte que le bord radial externe (18) du capot (3) glisse dans la première rainure (14),
- le premier élément élastique (19) permettant de pincer le bord radial externe (18) dans la première rainure (14) étant vulcanisé ou collé sur le bord radial externe (18) du capot (3) avant le relâchement du cintrage.
